# EUROPEAN PATENT APPLICATION

(11) **EP 2 002 721 A2**
(43) Date of publication of application: **17.12.2008**
(21) Application number: 08075544.0
(22) Date of filing: 10.06.2008
(51) Int. Cl.: A01N 65/00, A01N 31/16, A01N 31/08, A01N 31/06, A01P 9/00

(54) **Tea seed residues and natural tea saponin products**

(30) Priority: 11.06.2007 NL 1033969
(71) Applicant: Denka International Holding B.V., 3771 NG Barneveld (NL)
(72) Inventor: Den Braber, Antoine Arie, 3844 GC Harderwijk (NL); Moskal, Janusz Ryszard, 3871 CE Hoevelaken (NL)
(74) Representative: Wittop Koning, Tom Hugo

(57) **Abstract**

The invention relates to a composition for combating molluscs, such as snails and slugs, it also relates to the use of such a composition and to a method for combating molluscs. The combination of the components of the composition according to the invention is considerably more effective than can be expected on the basis of the effectiveness of the individual components.

## Description

The present invention relates to a composition for combating molluscs, such as snails and slugs, as well as relating to the use of such a composition and to a method for combating molluscs.

Together with other gastropods, snails and slugs belong to the class of Gastropoda in the phylum of Mollusca. Gastropods like the snail and the slug are generally characterized by a simple twisted shell or none at all, a muscular ventral foot for locomotion, and eyes and feelers or tentacles on the head, which is a separate part. Snails and slugs are amongst the worst pests in many gardens, greenhouses and countryside situations.

Well-known snail pests causing problems for example in gardens, greenhouses and fields under crops are those belonging to the *Helix spp.,* such as the brown garden snail *(Helix aspersa), Helix nemoralis,* the brown-lipped or banded wood snail (*Cepaea nemoralis),* the bush snail *(Zonitoides arboreus),* the white garden snail *(Theba pisana*), the Subulina snail (*Subulina octona*), *Helicella spp.* and *Cepaea spp.*

Various kinds of slugs cause regular damage to plants, for example in gardens, greenhouses and the countryside. Well-known slug pests causing problems include: *Deroceras reticulatum, Deroceras laeve* (smooth slug), the banded slug (*Limax poirieri*)*,* the greenhouse slug (*Milax gagates*)*, Arion spp., Arion subfucus* (dusky slug), *Arion circumscriptus* (grey garden slug), *Arion hortensis* (black field slug), *Arion rufus* (large red slug), *Arion ater* (large black slug), *Arion lusitanicus* (Spanish slug), large grey garden slug *(Limax maximus),* tawny garden slug (*L. flavus*)*, Limax glavus* (spotted garden slug), *Limax tenelus* (slender slug), the grey garden slug *(Agriolimax reticulatus),* and *Ariolimax columbianus* (banana slug).

Snails and slugs are molluscs that feed on various plants and on rotting vegetable matter. They chew small holes in the leaves of plants and can bite off the juicy parts of plants. They can also nibble into the fruit and outer wall of young plants. Since they prefer juicy foliage, they are the worst pest for seedlings, herbaceous plants and (ripening) fruit, including strawberries, artichokes and tomatoes that are near the ground. However, they also feed on foliage, ornamental plants, chlorophyll and fruits on trees, citrus trees being particularly sensitive to damage by them.

In plants, vegetables, flowers and fruit, even a small damage caused by slugs or snails can mean considerable economic losses. The yield loses most of its market value, if not all, as soon as the slightest sign of damage becomes noticeable. As a result, these molluscs can cause considerable damage, and it is important to protect plants from the damage caused by them.

Various measures can be taken to try and control and combat molluscs and especially snails and slugs.

The environment-friendly control is based on the use of a copper band and barriers formed by a powder. Materials such as sawdust, ash and unslaked lime are suitable for protecting plants by applying them around plants that need protection.

However, this method is generally insufficient when a powerful pest control measure is needed. This kind of pest control calls for the use of chemically active substances. Chemical substances used for destroying, controlling and/or inactivating molluscs like snails and slugs are generally known as molluscicides and cover a great variety of chemical compounds.

The use of baits containing for example iron phosphate (Escar-go, Slug-go, and Worry Free, made by W. Neudorff GmbH) as molluscicides has become popular as a replacement of products based on methiocarb (Mesural) and metaldehyde (Deadline). These last two substances have a relatively high secondary toxicity, that is to say, an undesirable toxicity to small mammals, birds and reptiles that eat the bait or the poisoned molluscs.

Various molluscicides have various mechanisms of action. For example, some molluscicides are thought to work as contact poisons, so direct contact with the pest is needed, while others are assumed to act as molluscicides the moment the pest ingests them, or they work by repelling or warding off the molluscs, so they can be used as barriers. It is said of various molluscicides that they have more than one mechanism of action.

US 2003/0,194,454 describes a pesticide that contains rosemary oil. This agent is particularly suitable for combating various insects, fungi and the like, but molluscs like snails are not mentioned there.

WO 01/91,555 describes a soap-based pesticide that is suitable for combating insects. The soap is a fatty acid, and the composition can also contain monoterpenes as odoriferous substances. Such odoriferous substances are preferably present in the composition in an amount of less than 1 wt-%.

US 2003/0 198,659 relates to a fibrous barrier that contains pesticides bound to the fibre matrix. Such barriers are suitable for combating for example worms, insects and snails. US 2003/0198659 also states that many different components can also be added to the barrier.

EP 0,427,894 relates to a pesticide for combating snails, amongst other pests, which contains a tannin, such as catechol and theaflavine, or tannic acid obtained from tea.

JP 2001/226,212 describes the use of saponin in combination with tannic acid for the preparation of a mat for combating snails.

A considerable drawback of these compositions, described as useful for combating snails, is that their components, for example saponin, are less efficient and active under field conditions, for example because of the limited stability of the compounds and/or the lack of a powerful anti-snail effect.

If one takes into account these limitations and drawbacks concerning the stability, efficiency and use of the currently available compounds and compositions for molluscicides, one realizes there is need for alternative compositions that are suitable as pesticides for snails, are more active and/or more stable, and can be used as molluscicides.

To provide a solution to at least one of the problems mentioned above, the present applicant carried out investigations and found surprisingly that the disadvantage of limited activity and/or efficiency of the known pesticides can be solved by a composition that comprises saponin and is suitable for combating molluscs, which composition is characterized in that it also comprises at least one second component chosen from the group consisting of carvacrol, thymol, eugenol and/or menthol.

It is unclear how the composition according to the invention exerts its favourable effect as a molluscicide, so it is pointless to speculate whether it works for example as a gastric or contact poison, a repellent, a barrier or by a combination of such mechanisms. Thus, although it is not entirely clear how the composition according to the present invention exerts its effect, it is evident that the composition according to the present invention acts as an efficient molluscicide.

Although saponin is only in combination with tannic acid described in JP 2001/226,212 for the preparation of a mat for combating snails, it has appeared that the presence of a second component (carvacrol, thymol, eugenol and/or menthol) in combination with such a saponin makes the combination clearly more effective in combating snails and/or molluscs than can be expected on the basis of the activity of the individual components. The combinations according to the present invention exhibit a synergistic effect in comparison with the activity of the separate compounds in question (see the examples).

As the expert will realize, the term "saponin" as used here means glycosides of steroids, steroid alkaloids (steroids with a nitrogen function) and/or triterpenes found in plants. Saponins generally dissolve in water, forming a soap-like foam. Saponins are found in many plants, including the following ones, but the list is not restricted to them: horse chestnut, ragged robin, lilies, agaves, soapwort, the fruit of the soap nut tree, Gotu Kola, olives, panax, soya, aloe, yucca, *Bacopa monnieri, Tribulus terrestris* (as protodioscin) and asparagus (as protodioscin).

Another important source of saponins is tea, for example Carnellia, especially *Camellia sinensis.* These saponins can be obtained in the form of powders or liquids for example from the seeds and/or the leaves of the tea plant. For example, Masayuki Yoshikawa described many different kinds or triperpenoid saponins in Chem. Pharm. Bull., vol. 53, No. 12 (2005) pp.1559-1564. Examples of saponins found in tea are theasaponin E3, E4, E5, E6, E7, theasaponin E1 and E2, assamsaponin A, B, C, D, F, and I, floratheasaponin A and camelliasaponin B1 and C1 [see Chem. Pharm. Bull., vol. 53, No. 12 (2005) pp. 1559-1564, but steroid saponins have also been found in tea [see for example Leuk Res., vol. 30, No. 4 (2006) pp. 459-468].

The expert will realize that the term "saponin" also covers saponin compounds, such as theasaponin E1 and the like, as well as mixtures of such saponin compounds, such as for example an extract obtained from tea or another plant that contains such saponins.

The composition according to the present invention preferably comprises a mixture of such saponins.

The saponin according to the present invention is preferably a terpene, and more preferably a diterpene or a triterpene.

The expert will know what is meant by the terms "carvacrol", "thymol", "eugenol" and/or "menthol".

Carvacrol (Synonyms: 5-isopropyl-2-methylphenol, 5-isopropyl-2-methylphenol, cymenol, hydroxy-p-cymene, isopropyl-o-cresol, isothymol and methyl-5-(1-methylethyl)-phenol) is found e.g. in (essential oils obtained from) a large number of plants, including thyme, oregano, *Origanum hirtum,* canary grass and bergamot.

Thymol (Synonyms: 2-isopropyl-5-methylphenol, 3-p-cymenol, 3-hydroxy-p-cymene, 5-methyl-2-isopropyl-1-phenol, 5-methyl-2-(1-methylethyl)-phenol, 6-isopropyl-m-cresol and isopropylcresol), is a terpenoid found in the essential oils of for example thyme (*Thymus vulgaris*)*,* oregano (*Origanum vulgare*) and related plants. Thymol is a monoterpene phenol derivative of cymene and is isomeric with carvacrol.

Eugenol (Synonyms: 1,3,4-eugenol, 1-allyl-3-methoxy-4-hydroxybenzene, 1-allyl-4-hydroxy-3-methoxybenzene, 1-hydroxy-2-methoxy-4-allylbenzene, 1-hydroxy-2-methoxy-4-prop-2-enylbenzene, 1-hydroxy-2-methoxy-4-propenylbenzene, 1-hydroxy-4-allyl-2-methoxybenzene, 2-methoxy-1-hydroxy-4-allylbenzene, 2-methoxy-4-(2-propen-1-yl)-phenol, 2-methoxy-4-(2-propenyl)-phenol; 2-methoxy-4-allylphenol, 2-methoxy-4-prop-2-enylphenol, 4-allyl-1-hydroxy-2-methoxybenzene, 4-allyl-2-methoxyphenol, 4-allylcatechol-2-methyl ether, 4-allylguaiacol, p-eugenol, 4-hydroxy-3-methoxyallylbenzene, 5-allylguaiacol and allylguaiacol), is an odoriferous substance and flavouring agent widely used in pharmaceuticals, cosmetics and food. It is also employed as a starting material for the preparation of for example isoeugenol and vanillin. Eugenol occurs in numerous plants, including cloves and cinnamon.

Menthol (Synonyms: cyclohexanol, 3-p-menthanol and cyclohexanol) is a terpenoid obtained for example from the essential oils of plants of the mint family (*Mentha* spp.), such as peppermint, wild mint and others. Menthol is used in many food-type products, especially in chewing gum, troches (pastilles) and sweets, such as peppermint sweets, but it is also employed in all kinds of freely available medications for sore throat, e.g. cough mixtures, as well as in lip balm and mouthwashes. It also counteracts itching and is used in embrocations for muscles and in similar products.

The carvacrol, thymol, eugenol and/or menthol that can be used in the composition according to the present invention can be of natural origin, that is to say, obtained from plant material, but they can also be prepared by chemical methods.

Carvacrol, thymol, eugenol and/or menthol are generally present as one or more components of an oil that is obtained from plants containing these components. The expert will realize that this refers to extracts from such plants.

The expert will realize that the substances mentioned above can be present in the form of salts (possibly alkali metal salts), acids and possibly complexes bound on a carrier. In the context of the invention, these forms are also covered by the terms "carvacrol", "thymol", "eugenol" and/or "menthol".

The term "molluscs" denotes here molluscs such as snails and slugs. When the text mentions snails, other molluscs, such as slugs, are also included, in addition to molluscs like snails.

In a preferred embodiment of the composition according to the present invention, the saponin of plant origin is chosen from the group consisting of tea (belonging to several *Camellia* species) and/or yucca and/or quillaia and/or quinoa and/or soya. It has been found that especially a saponin derived from such plants and more especially a saponin derived from tea is very suitable for use as the saponin incorporated in the composition according to the present invention, and it gives good synergistic results.

The term "tea" covers plants that belong to the genus *Camellia* and includes for example *Camellia sinensis* (Theaceae), their leaves, stems, seeds, flowers and roots, as well as extracts obtained from them, also covering materials obtained from them by processing, such as fermented tea material, oxidized tea material, black tea, oolong tea, green tea and white tea.

The term yucca covers plants of the *Yucca* family, especially *Yucca schidigera,* their leaves, stems, seeds, flowers and roots, together with extracts obtained from them, and materials obtained from them by processing. Yucca saponins are generally steroid saponins.

In another embodiment, the saponins present in the composition according to the present invention are preferably saponins that are found in tea (*Carnellia* spp.) and more preferably those present in the seeds of tea. It has been found that especially the seeds of the tea plant are rich in saponin [see Chem. Pharm. Bull., vol. 53, No. 12 (2005) pp. 1559-1564] and especially in triterpene saponins, and that they are effective in the composition according to the present invention.

In a preferred embodiment of the composition according to the present invention, the carvacrol, thymol, eugenol and/or menthol used in the composition according to the invention are either obtained from a plant oil or are present in a plant oil.

Investigations show that especially good results are obtained with carvacrol, thymol, eugenol and/or menthol that are used in the composition according to the present invention and which are obtained from a plant oil or are present in a plant oil.

We believe, but without being bound by it, that such an oil contains carvacrol, thymol, eugenol and/or menthol in a form that is effective and works synergistically in the composition according to the present invention.

The expert knows how such oils can be obtained and also that they are offered by numerous different suppliers. The expert also knows how to obtain carvacrol, thymol, eugenol and/or menthol from such an oil, for example by concentrating them by distillation (e.g. by steam distillation) and/or by partial purification by HPLC or a similar technique.

In a preferred embodiment of the composition according to the present invention, the second component present in the composition according to the invention is carvacrol (and its salts, acids, complexes and suchlike, as described above).

Investigations have shown that, of carvacrol, thymol, eugenol and/or menthol, it is especially carvacrol that represents a particularly effective component of the composition according to the present invention for combating molluscs, especially snails.

Carvacrol is commercially available and easy to use in the composition according to the invention, and its use is effective.

The use of carvacrol in the composition according to the invention produces a synergistic effect in the activity against molluscs, especially snails. It seems therefore that the presence of carvacrol in combination with saponin ensures a more effective means of combating snails and/or other molluscs than can be expected on the basis of the effect of the individual components of the composition. The combinations according to the invention exhibit a synergistic effect in comparison with the activity of the separate compounds (see the examples).

In a preferred embodiment of the composition according to the present invention the composition also contains tannin or a source of it. The expert will know what is meant by the term "tannin". Tannin is the collective name of chemical polyphenols that occur for example in tea (in the form of e.g. thearubigins and theaflavins) and in wine (see a comprehensive account for example in Am. J. Clin. Nutr., vol. 81,1st Suppl. (Jan. 2005) pp. 223S-229S.

It has been found that the presence of such a tannin in the composition according to the present invention further improves the activity of the composition in question. Tea that contains saponin and tannin is especially expedient.

As regards the second component present in the composition according to the invention, it has been found especially expedient to incorporate it in the form of a salt, preferably an alkali metal salt. It has been found that such salts have a better solubility in the composition according to the invention and therefore give good results. More especially, carvacrol, thymol, eugenol and/or menthol are present in the salt form obtained for example by neutralizing e.g. carvacrol, thymol, eugenol and/or menthol with an aqueous solution (for example a 10% solution) of sodium hydroxide or potassium hydroxide, or else another alkali metal hydroxide or alkali metal salt. In other words, sodium hydroxide or potassium hydroxide (or else another alkali metal hydroxide) can be added to the composition containing saponin and a second component chosen from a group comprising carvacrol, thymol, eugenol and/or menthol, giving a composition according to the invention to which NaOH or KOH has been added.

It has been found that this addition further enhances the activity of the composition, for example in comparison with a composition according-to the invention in which for example carvacrol has not been treated with an aqueous solution of sodium hydroxide and/or potassium hydroxide.

In a preferred embodiment of the composition according to the present invention the composition also comprise at least one physically irritating substance. This physically irritating substance can be chosen for example from a group comprising quartz, quartz meal, kaolin, kaolinite, attapulgite, sepiolite, aluminium oxides, magnesite, aluminium iron silicate, cryolite, talc, zeolite, montmorillonite, bentonite, magnesium aluminium silicate, chalk, gypsum, diatomaceous earth, molecular sieves, Celite, barium sulphate, Poropak, ground nutshells, ground eggshells, ground shell silica, earth, metals and/or crystals.

The expert will know what is meant by the term "physically irritating substance". Such a substance exerts an irritating effect when a mollusc, especially a snail, comes into contact with it. This irritation is due for example to the form of the substance and not to its chemical properties to any great extent. For example, it is believed that e.g. silica (and other small hard granular substances such as earth and metal particles) can cause small cuts and wounds to the foot of snails, thereby acting as a physically irritating substance.

It has been found that when such a composition according to the invention is used, the combination of saponin, a second component chosen from the group consisting of carvacrol, thymol, eugenol and/or menthol, and a physically irritating substance is effective. This effect is attributed both to the chemical activity and to the physical activity exerted by such a composition.

In a preferred embodiment of the composition according to the present invention the composition is used in an application form that can be a gel, a spray, a powder or a liquid. These application forms are easy to use in the area to be treated, can be prepared by simple means, and provide an effective solution to the problem according to the present invention.

In a preferred embodiment of the composition according to the present invention the composition contains 0.1-10 wt-%, preferably 0.15-8 wt-% and more preferably 0.2-5 wt-% of saponin. It has been found that these amounts are especially effective in combating snails in the context of the invention. To obtain such a composition, for example a source containing 10-20% of saponin can be used.

In a preferred embodiment of the composition according to the present invention the composition contains 0.1-10 wt-%, preferably 0.15-8 wt-% and more preferably 0.2-5 wt-% of carvacrol. In a preferred embodiment of the composition according to the present invention the composition contains 0.1-10 wt-%, preferably 0.15-8 wt-% and more preferably 0.2-5 wt-% of saponin and 0.1-10 wt-%, preferably 0.15-8 wt-% and more preferably 0.2-5 wt-% of carvacrol. It has been found that this combination is especially effective in combating snails in the context of the present invention.

In a preferred embodiment of the composition according to the present invention the composition comprises a composition according to the invention to which NaOH and/or KOH has been added. The composition according to the present invention preferably has a pH of 7-9 and more preferably 7.5-8.5. It has been found that such a composition is especially effective in combating snails in the context of the invention. It is believed that the addition of NaOH or KOH raises the pH of the composition, and/or that NaOH and/or KOH reacts with an active component of the composition, for example carvacrol, and/or that salts of for example carvacrol are formed in the composition according to the invention, whereby the activity of the composition is further improved.

The expert will realize that the composition can contain further customary additives in the usual amounts. Non-limitative examples of these are gums, such as xanthan gum, Sipernat 22S, Celite 400 TC (and other sources of diatomaceous earth), iron particles, sawdust, preservatives, viscosity modifiers, odoriferous substances, colorants, flavouring agents, fillers and water. Such components can be present in the composition according to the invention in amounts of up to 100 wt-%.

In a preferred embodiment of the composition according to the present invention the composition comprises 0.1-10 wt-% of tannin and/or 0.1-10 wt-% of a physically irritating substance. It has been found that such a composition is especially effective in combating snails in the context of the invention.

According to another aspect of the present invention, the composition according to the invention is used for preventing or combating snails by applying it in the living environment, i.e. the habitat, of snails. This application in the habitat of snails comprises the application of the composition in the form of a barrier, for example one formed around a plant, around a bed of plants, or even around a greenhouse where such plants are grown. By the application of such a barrier the access of molluscs, especially snails, to the plant is greatly reduced.

A barrier can be a closed barrier (for example around the plant) or the agent in question is only applied at certain points in the habitat of snails, for example by scattering the composition according to the invention along an entrance, in a heap, or over a plant.

Application in the habitat also includes application on the snails themselves.

The expert knows that the "habitat" or "living environment" of molluscs, especially snails, includes any area where the organism is viable and can survive and where food is available to it, for example in the form of plant material, examples being greenhouses and gardens, but also stores of vegetables (after harvest), and places where something that can serve as food for the snails is kept, for example a barn used for storing harvested crops.

A special form of application in the habitat of snails that can now be used with the composition according to the invention is application on a non-horizontal substrate, such as a vertical or slanting wall, roof, post and suchlike. The composition according to the invention has been found to adhere well to such substrates and can therefore act against snails that for example try to reach a certain area or a certain plant by getting over or across such objects.

The expert will realize that liquids and/or gels containing a composition according to the invention are especially suitable for this purpose. For example, these liquids or gels can be absorbed on the substrate or dry on them to leave behind a thin layer with the active components, or else continue to adhere to the surface.

In a preferred embodiment of the use according to the present invention the composition according to the invention is employed for preventing or combating snails in greenhouses.

This affords an efficient and controllable method for combating snails or snail infestations in greenhouses, for example by the application of the composition according to the invention around or in the greenhouses. It is believed that this provides an effective way of separating the habitat of snails in the greenhouse from their living environment outside the greenhouse, so that individual snails or snail infestations can be combated.

In a preferred embodiment of the use according to the present invention the composition according to the invention is employed for preventing or combating plant pests, preferably those affecting plants of the family *Orchidaceae.*

It has been found that plants of the *Orchidaceae* family in particular are not affected adversely by the composition according to the invention or by its use, whereas snails or slugs, especially those of the species *Lehmannia valentiana* can be effectively combated by it.

According to another aspect, the invention relates to a method for combating snails, characterized in that the method comprises the step of application of a composition according to the present invention in the habitat of snails.

It has been found that this method is especially effective in combating snails. As described in the examples in more detail, the method is useful for: eliminating snails from a habitat, suppressing them, preventing them, or reducing their access into a habitat, keeping the extent of their infestation under control in a particular habitat, and for destroying them. All these activities, whether they take place singly or in combination, are denoted here by the term "combating".

In a preferred embodiment of the method according to the present invention the composition that can be applied in the habitat also contains at least a physical irritant, a chemical irritant or a repellent. In the preferred case, the composition also contains a physical irritant, a chemical irritant and a repellent.

It has been found that such additives can further improve the effectiveness of the composition according to the present invention when it is used by the method in question. The expert knows what is meant by the terms "physical irritant" (or "physically irritating substance"), "chemical irritant" and "repellent".

A "repellent" is for example an agent that can combat a mollusc such as a snail without having to come into contact with it, since the snail leaves the place where the repellent is applied. Special examples are when such repellent emits a smell on evaporation or the air distributes it in such a way that snails can be combated in the context of the present invention.

In a preferred embodiment of the method according to the present invention the composition that is applied in the habitat of snails is in the form of a band, that is to say a strip, a ring, a line or suchlike with basically a certain width (i.e. a diameter in the case of a ring) that is at least 0.9 times, preferably 1.0 times, more preferably 1.5 times and most preferably 2.0 times the average length of the snail to be combated.

The expert knows that snails have various lengths. The length of a snail is determined in the context of the present invention by the distance between its head and its rear end. The length of snails can vary between for example 3 and 25 cm.

The average length denotes here the average length of the type of snail that is to be combated in the context of the invention, and can be determined for example by collecting 10 snails of the kind that is to be combated from their habitat, or - if none is found there - from any other habitat that is comparable to the one that is to be treated, and then determining their average length.

It has been found that, when the band has a width that is at least 0.9 times, preferably 1.0 times, more preferably 1.5 times and most preferably 2.0 times the average length of the snail to be combated, the latter can be effectively combated. Snails cannot easily cross such a band, if at all, and are therefore effectively combated in this way.

The composition is preferably applied over the surface to be treated at a rate of 0.1-10 mg/cm² and more preferably at a rate of 1- 5 mg/cm².

### Examples

### Example 1: Compositions according to the present invention and comparative compositions.

The compositions listed in Table 1 below were prepared in the usual way. Compositions 1-9 are compositions according to the present invention, while compositions 10 and 11 are comparative compositions.

**Table 1**

| | 1 | 2 | 3 | 4 | 5 | 6 | 7 | 8 | 9 | 10 | 11 |
|---|---|---|---|---|---|---|---|---|---|---|---|
| **Component** | | | | | | | | | | | |
| Saponin | 1 | 1 | 1 | 1 | 1 | 1 | 1 | 1 | 1 | 1 | |
| Carvacrol | 0.2 | | | | 0.2 | 0.4 | 0.2 | 0.1 | 0.2 | | 0.2 |
| Eugenol | | 0.2 | | | | | | | | | |
| Thymol | | | 0.2 | | | | | 0.1 | | | |
| Menthol | | | | 0.2 | | | | | | | |
| Tannin | | | | | | | 1.0 | | | | |

These values refer to the amounts in wt-% of dry matter. In the case of Compositions 5 and 9, the mixture was treated with an aqueous 10% solution of NaOH (Composition 5) or KOH (Composition 9) to bring the pH up to 8. The compositions also contained water to 100 wt-%. Saponin was technical-grade saponin from Taiwan Fu Kung Industrial Co. Ltd., Hangzon Choisun Tea-Sci-Tech. Co. Ltd., or Zhejiang Orient Development Co. Ltd.

### Example 2: Effect of Compositions 1-9 and Compositions 10 and 11 as

### molluscicides

A. Compositions 1-9 and Compositions 10 and 11 from Table 1 were applied to slugs by spraying. About 0.12 grams of the solution were sprayed, of which about 10-20% landed on the slugs. The slugs used here belonged to the species *Deroceras laeve, Limax maximus* and *Arion lusitanicus.* The results obtained are shown in Table 2 below.

**Table 2**

| | **Time taken to die*** |
|---|---|
| **Composition** | |
| 1 | 6 minutes |
| 2 | 6 minutes |
| 3 | 7 minutes |
| 4 | 6 minutes |
| 5 | 3 minutes |
| 6 | 5 minutes |
| 7 | 5 minutes |
| 8 | 4 minutes |
| 9 | 3 minutes |
| 10 | 40 minutes |
| 11 | 35 minutes |

| | |
|---|---|
| *After this "time taken to die" the slugs showed no signs of life. | |

The results clearly show that the compositions according to the present invention (Compositions 1-9), which contained a combination of a saponin and a second component chosen from the group of carvacrol, thymol, eugenol and/or menthol, had a considerably stronger effect than Compositions 10 and 11.

It has been found that the presence of the second components specified above (carvacrol, thymol, eugenol and/or menthol), in combination with such a saponin, renders the combination considerably more effective in combating snails and/or other molluscs than can be expected on the basis of the effectiveness of the individual components.

In addition, the above results show that the composition according to the present invention to which NaOH or KOH was added (and which were therefore neutralized) are especiaiiy effective and are therefore preferred in particular.

Example 2: Method for the preparation of compositions to which NaOH and KOH are added.

### Various solutions were prepared:

- 2(A) About 14 g of tea saponin (from Taiwan Fu Kung Industrial Co., Ltd., containing 68 wt-% of saponin) were dissolved in 1500 grams of water, 6 grams of sodium carboxymethylcellulose were added, and the mixture was stirred for 30 minutes, after which 5 grams of xanthan gum were added, and the mixture was stirred until the xanthan gum had dissolved, giving a dark brown liquid.
- 2(B) About 4 g of carvacrol were mixed with 50 grams of water and neutralized with an aqueous 33% solution of NaOH-solution (3.24 g; pH 7.5). The resulting clear solution of sodium carvacrol was then added to a mixture prepared as described in 2(A).
- 2(C) About 4 g of carvacrol were mixed with 50 grams of water and neutralized with an aqueous 33% solution of KOH (3.24 g; pH 7.5). The resulting clear solution of potassium carvacrol was then added to a mixture prepared as described in 2(A).
- 2 (D) The method described in 2(B) was used, except that carvacrol was replaced by thymol [2 (D1)], eugenol [2 (D2)] and menthol [2 (D3)]. The resulting solutions, i.e. 2 (D1), 2 (D2) and 2 (D3), which were solutions of sodium thymol, sodium eugenol and sodium menthol respectively, were added singly to mixtures prepared as described in 2(A).
- 2 (E) The method described in 2 (C) was used, except that carvacrol was replaced by thymol [2 (E1)], eugenol [2 (E2)] and menthol [2 (E3)]. The resulting solutions, i.e. 2 (E1), 2 (E2), and 2 (E3), which were solutions of potassium thymol, potassium eugenol and potassium menthol respectively, were added singly to mixtures prepared as described in 2(A).

8 g of Sipernat 22S and 12 g of Celite 400 TC were added to the mixtures obtained as described above by combining a mixture that had been prepared in 2(B)-2(E) with a mixture prepared as described in 2(A). The volume was made up to 2 litres with tap water, and the mixture was stirred for about 1 hour.

### Example 3: A composition according to the present invention.

A composition was prepared by mixing the following components:
1.4 wt-% of tea saponin
0.3 wt-% of sodium carboxymethylcellulose
0.4 wt-% of carvacrol
0.2 wt-% of xanthan gum
0.4 wt-% of Sipernat 22 S
0.6 wt-% of Celite 400 TC
0.5 wt-% of NaOH (33%)
water to 100 wt-%.

Other compositions were prepared by varying the amount (wt-%) of each of the above components by at most 50%, that is to say, by varying the amount of for example tea saponin from 0.7 to 2.1 wt-% and the amount of for example carvacrol from 0.2 to 0.6 wt-%.

### Example 4

### Compositions specified in Table 3 were prepared:

**Table 3**

| **Compound** | **Formulation, wt-%** | | | |
|---|---|---|---|---|
| | A | B | C | D |
| Tea saponin | 1.00 | 1.00 | 1.00 | - |
| Sodium-carboxymethylcellulose | - | - | - | 1.00 |
| Carvacrol | 0.20 | 0.20 | 0.20 | 0.20 |
| Aqueous NaOH (33%) | 0.50 | 0.50 | 0.50 | 0.5 |
| Sipernat 22S | 0.40 | - | 0.40 | - |
| Celite 400 TC | 0.60 | 0.60 | - | - |

Each of the above formulations A, B, C and D was applied in the form of a band with a width of 4 cm around an untreated area. Two snails of the species *Helix aspersa,* one snail of the species *Helix nemoralis,* three slugs of the species *Deroceras laeve,* one slug of the species *Limax maximus,* one slug of the species *Arion rufus* and one slug of the species *Lehmannia valentiana* were placed in the untreated area surrounded by formulation A, B, C or D. These molluscs had unlimited access to water, but no feed was present for them in the area surrounded by one of the formulations.

The snails and slugs could not cross the band formed by formulation A, B or C, and they all perished. In the case when the band was made with formulation D, most (7) of them were able to cross the band, reaching the food placed outside the band. A similar result was obtained when carvacrol in composition D had been replaced by 1 wt-% of saponin (Formulation E), where 8 molluscs managed to reach the food outside the band or barrier. The presence of the second component (carvacrol, thymol, eugenol and/or menthol), in combination with a saponin, evidently made the combination markedly more effective in combating snails and/or slugs than could be expected on the basis of the effectiveness of the individual components.

### Example 5

The experiment described in Example 4 was repeated with the composition obtained as in 2 by mixing 2(A) with 2(B), adding 8 grams of Sipernat 22S and 12 grams of Celite 400 TC, and making up the volume to 2 litres with tap water (see Example 2).

The formulation was applied at a rate of *about 0.9 mglcm²* (testing condition 5A) and *2.2 mg*/*cm²* (testing condition B) in the form of a 4-cm-wide band formed around the snails and slugs as described in Example 4.

The results obtained under testing conditions 5A showed that only 1 mollusc managed to cross the barrier in 24 hours; although it was outside the barrier, it was dead. After 48 hours another one seemed to have escaped, but it was also dead. At the end of the experiment, all the molluscs that had not been able to cross the barrier were found to be dead. Under testing conditions 5B, none of the molluscs could cross the barrier and they were all found dead within the barrier.

The results of the above examples clearly show that the combination of saponin with a second component chosen from the group comprising carvacrol, eugenol, thymol and/or menthol leads to a composition with a favourable action: it acts as a repellent, and the snails and slugs cannot cross the barrier formed with the aid of such a combination. In addition, even if they do cross the barrier, contact between them and the composition according to the present invention leads to their death. Owing to this "double action", the composition according to the present invention is especially suitable for use as an agent for treating snails and other mollusc pests. Furthermore, the results of the experiments indicate that the combination according to the present invention has a synergistic effect, and more molluscs are killed and/or removed from their habitat and/or warded off than can be expected on the basis of the activity of the individual components. As can be seen from Example 1, the combination (1-10) is much more effective than the individual components. The time taken to die is expected to be 35 minutes on the basis of the individual components, but it is only 3-10 minutes for the combination. Example 4 also shows that, whereas the single compound is ineffective in combating snails and slugs, the combination according to the present invention is definitely effective against them.

## Claims

1. Composition for combating molluscs, comprising saponin, **characterized in that** it contains a second component chosen from the group consisting of carvacrol, thymol, eugenol and menthol.

2. Composition according to claim 1, **characterized in that** the saponin is obtained from a plant chosen from the group consisting of tea, and/or yucca and/or quillaia and/or quinoa and/or soya.

3. Composition according to claim 2, **characterized in that** the plant is tea.

4. Composition according to claim 1, **characterized in that** carvacrol, thymol, eugenol and/or menthol are obtained from an essential-oil of a plant or are present in an essential oil of a plant.

5. Composition according to any one of the preceding claims, **characterized in that** the second component is carvacrol.

6. Composition according to any one of the preceding claims, **characterized in that** the composition further comprises tannin.

7. Composition according to any one of the preceding claims, **characterized in that** the second component is in the form of a salt, preferably an alkali metal salt.

8. Composition according to any one of the preceding claims, **characterized in that** the composition further comprises at least one physically irritating substance, chosen from the group consisting of quartz, quartz meal, kaolin, kaolinite, attapulgite, sepiolite, aluminium oxides, magnesite, aluminium iron silicate, cryolite, talc, zeolite, montmorillonite, bentonite, magnesium aluminium silicate, chalk, gypsum, diatomaceous earth, molecular sieves, Celite, barium sulphate, Poropak, ground nutshells, ground eggshells, ground shell silica, earth, metals and/or crystals.

9. Composition according to any one of the preceding claims, **characterized in that** the composition is in an application form chosen from gel, spray, powder or liquid.

10. Composition according to any one of the preceding claims, **characterized in that** the composition comprises 0.1-10 wt-%, preferably 0.15-8 wt-%, more preferably 0.2-5 wt-% of saponin.

11. Composition according to any one of the preceding claims, **characterized in that** the composition comprises 0.1-10% wt-%, preferably 0.15-8 wt-% and more preferably 0.2-5 wt-% of carvacrol.

12. Composition according to claim 11, **characterized in that** the composition comprises 0.1-10 wt-%, preferably 0.15-8 wt-%, more preferably 0.2-5 wt-% of saponin and 0.1-10 wt-%, preferably 0.15-8 wt-%, more preferably 0.2-5 wt-% of carvacrol.

13. Composition that comprises a composition according to any one of the preceding claims to which NaOH or KOH has been added.

14. Composition according to any one of the preceding claims, **characterized in that** the composition also comprises 0.1-10 wt-% of tannin and/or 0.1-10 wt-% of a physically irritating substance.

15. Use of a composition according to any one of the preceding claims for preventing or combating snails, by application thereof in a habitat of snails.

16. Use according to claim 15 for preventing or combating snails in greenhouses.

17. Use according to claims 15 and 16 for preventing or combating pest of plants, preferably of plants of the family *Orchidaceae.*

18. Method for the combating of snails, **characterized in that** the method comprises the step of applying a composition according to the present invention in the habitat of snails.

19. Method according to claim 18, **characterized in that** the composition that is applied in the habitat further comprises at least a physical irritant, a chemical irritant or a repellent.

20. Method according to claims 18-19, **characterized in that** the composition that is applied in the habitat of the snail is applied in the form of a band the width of which is basically at least 0.9, preferably 1.0, more preferably 1.5 and most preferably 2.0 times the average length of the snail to be combated.
